# EUROPÄISCHE PATENTSCHRIFT

(11) **EP 4 437 851 B1**
(45) Veröffentlichungstag und Bekanntmachung des Hinweises auf die Patenterteilung: **29.07.2026**
(21) Anmeldenummer: 24164028.3
(22) Anmeldetag: 18.03.2024
(51) Int. Cl.: A21C 3/10, A21C 5/00

(54) **TEIGSCHNEIDEVORRICHTUNG ZUM ZUSCHNEIDEN EINES TEIGBANDES**
DOUGH CUTTING DEVICE FOR CUTTING A DOUGH SHEET
DISPOSITIF DE COUPE DE PÂTE POUR COUPER UNE BANDE DE PÂTE

(30) Priorität: 28.03.2023 DE 102023107743
(43) Veröffentlichungstag der Anmeldung: 02.10.2024
(73) Patentinhaber: MULTIVAC Marking & Inspection GmbH & Co. KG, 32130 Enger (DE)
(72) Erfinder: TREISE, Arthur, 32257 Bünde (DE)
(74) Vertreter: Grünecker Patent- und Rechtsanwälte PartG mbB

(56) Entgegenhaltungen:
- EP-A1- 0 564 131
- EP-A1- 2 305 040
- EP-A1- 3 199 028
- JP-B2- 3 811 814
- US-A1- 2010 166 902
- US-B1- 6 272 979
- US-B1- 6 524 090

## Beschreibung

Die vorliegende Erfindung betrifft eine Teigschneidevorrichtung zum Zuschneiden eines Teigbandes gemäß unabhängigem Anspruch 1 sowie ein Verfahren zum Zuschneiden eines Teigbandes mit einer Teigschneidevorrichtung gemäß Anspruch 6.

### Stand der Technik

Teigschneidevorrichtungen zum Zuschneiden von Teigbändern sind aus dem Stand der Technik bekannt. In diesen Maschinen wird ein üblicherweise kontinuierliches Teigband durch ein Schneidelement, wie etwa eine Guillotine, hindurchgeführt und anschließend abschnittsweise gewogen, sodass die Betätigung des Schneidelements basierend auf dem gemessenen Gewicht so erfolgen kann, dass eine Portionierung des Teigbandes in einzelne Teigstücke mit gewünschtem Gewicht erreicht wird.

Beispielsweise zeigt die EP 3 323 294 A1 eine entsprechende Teigschneidevorrichtung. Diese umfasst pro Spur für ein Teigband ein Schneidelement und zwei stromabwärts des Schneidelements angeordnete Transporteinrichtungen mit zugeordneten Wiegebereichen, in denen das Gewicht eines darauf angeordneten Teigelements bestimmt wird, um basierend darauf das Schneidelement zu betätigen.

Die EP 2 305 040 A1 beschreibt weiterhin eine Vorrichtung zum Abtrennen eines Teigblocks von einer Teigmasse mit einer von äußeren Begrenzungselementen gebildeten Kammer zur Aufnahme der Teigmasse und zur Abgabe des von der Teigmasse abgetrennten Teigblocks sowie ein Verfahren zum Abtrennen eines Teigblocks von einer Teigmasse, die in einer von äußeren Begrenzungselementen gebildeten Kammer aufgenommen wird, aus der der von der Teigmasse abgetrennte Teigblock anschließend abgegeben wird.

Die Betätigung des Schneidelements ist jedoch mit einer Totzeit verbunden, also einem zeitlichen Versatz zwischen der Betätigung des Schneidelements einerseits und dem tatsächlichen Bewirken des Schneidvorgangs durch das Schneidelement (etwa aufgrund des von dem Messer der Guillotine zurückzulegenden Weges und der dafür nötigen Zeit). Dies führt dazu, dass bei Weitertransport des Teigbandes während dieser Totzeit das zu schneidende Teigstück mehr Masse besitzt als zum Zeitpunkt der Betätigung des Schneidelements. Dies kann zu unerwünschten Abweichungen in der tatsächlich erhaltenen Masse des Teigstücks führen, was sich nachteilig auf die zu erzielende Produktqualität, insbesondere hinsichtlich der Einhaltung gewünschter Gewichte auswirken kann.

### Aufgabe

Ausgehend von dem bekannten Stand der Technik besteht die zu lösende technische Aufgabe somit darin, eine Teigschneidevorrichtung und ein Verfahren zum Zuschneiden eines Teigbandes zu erzielende Produktqualität, insbesondere hinsichtlich der Einhaltung gewünschter Gewichte auswirken kann.

### Aufgabe

Ausgehend von dem bekannten Stand der Technik besteht die zu lösende technische Aufgabe somit darin, eine Teigschneidevorrichtung und ein Verfahren zum Zuschneiden eines Teigbandes anzugeben, mit denen ein zuverlässiges Zuschneiden des Teigbandes in einzelne Teigstücke erreicht werden kann.

### Lösung

Diese Aufgabe wird erfindungsgemäß durch die Teigschneidevorrichtung zum Zuschneiden eines Teigbandes gemäß Anspruch 1 sowie das Verfahren zum Zuschneiden eines Teigbandes mit einer Teigschneidevorrichtung gemäß Anspruch 6 gelöst. Vorteilhafte Weiterbildungen der Erfindung sind in den Unteransprüchen erfasst.

Die erfindungsgemäße Teigschneidevorrichtung zum Zuschneiden eines Teigbands umfasst ein Schneidelement zum Schneiden eines Teigbands, eine stromab des Schneidelements angeordnete, erste Wiegeeinheit zum Bestimmen eines Gewichtswerts eines Teigstücks des Teigbands, und eine Steuereinheit, wobei die Steuereinheit ausgebildet ist, basierend auf wenigstens zwei nacheinander bestimmten Gewichtswerten eines Teigstücks einen Massenstrom des Teigbands zu bestimmen und basierend auf wenigstens einem der bestimmten Gewichtswerte und dem bestimmten Massenstrom das Schneidelement zum Schneiden des Teigbands zu steuern.

Der Massenstrom kann als zeitliche Ableitung der Änderung des Gewichtswertes, der bei aufeinanderfolgenden Messungen des Gewichtswertes von dem Wiegebereich bestimmt wird, verstanden werden. Dabei kann es sich um eine analytische oder nummerische zeitliche Ableitung des bestimmten Gewichtswerts handeln. Die Steuereinheit kann insbesondere als Computer ausgeführt sein und über einen zugeordneten Speicher verfügen und sowohl mit dem Wiegebereich als auch mit dem Schneidelement geeignete Verbindungen zum Übermitteln von Steuersignalen ausgestaltet sein.

Erfindungsgemäß wird durch Berücksichtigung des Massenstroms das Produktgewicht, das insgesamt erhalten wird, wenn bei einem gegebenen Gewichtswert das Schneidelement betätigt wird, zuverlässig auch in den Bereich der Totzeit extrapoliert. Hierdurch wird eine genaue Steuerung der Betätigung des Schneidelements erzielt, sodass bspw. ein Zielgewicht des zu schneidenden Teigstücks mit hoher Genauigkeit erreicht wird.

Es kann vorgesehen sein, dass die Teigschneidevorrichtung eine zweite Wiegeeinheit zum Bestimmen eines Gewichtswerts eines Teigstücks des Teigbands umfasst und die Steuereinheit ausgebildet ist, den Massenstrom basierend auf den wenigstens zwei nacheinander bestimmten Gewichtswerten eines Teigstücks und wenigstens einem zweiten Gewichtswert eines Teigstücks, der von der zweiten Wiegeeinheit gemessen wird, zu bestimmen.

Die zweite Wiegeeinheit kann insbesondere stromab der ersten Wiegeeinheit angeordnet sein. Der wenigstens eine zweite Gewichtswert kann bspw. als Kontrollwert genutzt werden, um die wenigstens zwei nacheinander bestimmten Gewichtswerte des Teigstücks und die erste Wiegeeinheit zu kontrollieren (beispielsweise durch Differenzbildung und Vergleich der Differenz mit einem Grenzwert). Alternativ oder zusätzlich kann für den Fall, dass das Teigstück eine Ausdehnung in Transportrichtung des Teigstücks besitzt, die größer als die erste Wiegeeinheit ist, der Massenstrom basierend auf einer Kombination (bspw. Summe) wenigstens eines des mit der ersten Wiegeeinheit bestimmten Gewichtswerts des Teigstücks und des mit der zweiten Wiegeeinheit bestimmten Gewichtswerts des Teigstücks bestimmt werden. Die Zuverlässigkeit des bestimmten Gewichtswerts kann damit erhöht werden, was die Zuverlässigkeit beim Zuschneiden des Teigstücks erhöht.

Erfindungsgemäß ist die Steuereinheit ausgebildet, das Schneidelement zum Schneiden des Teigbands basierend auf einer Totzeit des Schneidelements zu steuern. Da nach Auslösen des Schneidelements und bis zum tatsächlichen Schneidvorgangs des Teigbands durch das Schneidelement eine gewisse Zeit vergeht (bspw. 100 ms), kann sich durch Weiterbewegen des Teigstücks in Richtung der ersten Wiegeeinheit die Masse des Teigstücks vergrößern. Durch Berücksichtigung der Totzeit und bspw. Extrapolierend der Masse des Teigstücks unter Anwendung des Massenstroms kann das Schneiden des Teigstücks zuverlässig erreicht werden.

Erfindungsgemäß ist ferner vorgesehen, dass die Steuereinheit kann ausgebildet ist, basierend auf einem Vergleich eines Zielgewichts des Teigstücks mit einer Summe aus einem zuletzt bestimmten Gewichtswert und dem Produkt aus Massenstrom und Totzeit das Schneidelement zum Schneiden des Teigbands zu steuern.

Hierdurch wird die zu erwartende Masse des Teigstücks nach Ende oder mit Ende der Totzeit durch lineare Extrapolation ausgehend von dem vor Betätigen des Schneidelements bestimmten Gewichtswert bestimmt. Hierdurch kann prognostiziert werden, bei welchem Gewicht des Teigstücks das Schneidelement betätigt werden muss, sodass das Teigstück während des Schneidens nach Ende der Totzeit das gewünschte Gewicht aufweist. Die Genauigkeit beim Schneiden des Teigstücks kann hiermit verbessert werden.

Die Steuereinheit kann ausgebildet sein, basierend auf einem Vergleich zwischen dem bestimmen Massenstrom und einem Grenzwert das Schneidelement zum Schneiden des Teigbands zu steuern oder zu blockieren.

Übersteigt der bestimmte Massenstrom einen Grenzwert oder unterschreitet der Massenstrom einen Grenzwert, kann dies auf Fehler beim Transport des Teigs hindeuten. Beispielsweise kann es zu unerwünschter Teigakkumulation zwischen oder in Übergängen von Transportbändern (bspw. einem Transportband vor dem Schneidelement und einem Transportband in der zweiten Wiegeeinheit) kommen, was zu einer starken aber kurzfristigen Erhöhung des gemessenen Gewichtswerts (aufgrund wirkender Kräfte) führen kann, was Einfluss auf den bestimmten Massenstrom hat. Werden diese berücksichtigt, um das Schneidelement zu betätigen oder nicht zu betätigen, kann dies ein zuverlässigeres Schneiden des Teigbands erreichen.

Es kann vorgesehen sein, dass die Steuereinheit ausgebildet ist, eine Information an einen Bediener auszugeben, wenn der bestimmte Massenstrom größer als der Grenzwert ist. Damit kann bspw. eine Fehlerbehebung ausgelöst werden.

In einer Ausführungsform ist die Steuereinheit ausgebildet, den Massenstrom basierend auf allen nach einer Betätigung des Schneidelements bestimmten Gewichtswerten zu bestimmen. Beispielsweise kann der Massenstrom durch Mittelung aller bestimmten Massenströme, die aus jeweils zwei aufeinanderfolgenden Messungen von Gewichtswerten bestimmt werden, errechnet werden. Alternativ oder zusätzlich kann auch vorgesehen sein, dass aus allen bestimmten Gewichtswerten zunächst eine Regressionskurve bestimmt wird, die den Verlauf des Gewichtswertes möglichst genau reproduziert. Aus dieser Kurve kann dann die nummerische Ableitung bestimmt werden. Hiermit kann zuverlässig auch auf geringfügige Schwankungen in der Qualität des zugeführten Teigbandes (bspw. Lufteinschlüsse oder Änderungen in der Dicke des Teigbandes) reagiert werden und dann die Steuerung des Schneidelements basierend darauf zuverlässig erfolgen.

Erfindungsgemäß ist weiterhin ein Verfahren zum Zuschneiden eines Teigbands mit einer Teigschneidevorrichtung zum Zuschneiden des Teigbands vorgesehen, die Teigschneidevorrichtung umfassend ein Schneidelement zum Schneiden des Teigbands, eine stromab des Schneidelements angeordnete, erste Wiegeeinheit zum Bestimmen eines Gewichtswerts eines Teigstücks des Teigbands, und eine Steuereinheit, wobei das Verfahren umfasst, dass die Steuereinheit basierend auf wenigstens zwei nacheinander bestimmten Gewichtswerten des Teigstücks einen Massenstrom des Teigbands bestimmt und basierend auf wenigstens einem der bestimmten Gewichtswerte und dem bestimmten Massenstrom das Schneidelement zum Schneiden des Teigbands steuert. Mit diesem Verfahren kann die Genauigkeit, mit der Teigstücke aus einem Teigband zugeschnitten werden, erhöht werden.

Es kann vorgesehen sein, dass die Teigschneidevorrichtung eine zweite Wiegeeinheit zum Bestimmen eines Gewichtswerts des Teigstücks des Teigbands umfasst und die Steuereinheit den Massenstrom basierend auf den wenigstens zwei nacheinander bestimmten Gewichtswerten des Teigstücks und wenigstens einem zweiten Gewichtswert des Teigstücks, der von der zweiten Wiegeeinheit gemessen wird, bestimmt. Mit dieser Ausführungsform können auch Teigstücke, die größer als die erste Wiegeeinheit sind, zuverlässig zugeschnitten werden oder eine Kontrolle der in der ersten Wiegeeinheit gemessenen Gewichtswerte stattfinden.

Erfindungsgemäß steuert die Steuereinheit das Schneidelement zum Schneiden des Teigbands basierend auf einer Totzeit des Schneidelements. Hiermit kann die Zuverlässigkeit beim Zuschneiden der Teigstücke weiter erhöht werden.

Erfindungsgemäß ist vorgesehen, dass die Steuereinheit basierend auf einem Vergleich eines Zielgewichts des Teigstücks mit einer Summe aus einem zuletzt bestimmten Gewichtswert und dem Produkt aus Massenstrom und Totzeit das Schneidelement zum Schneiden des Teigbands steuert. Dies extrapoliert einen zuletzt gemessenen Gewichtswert unter Berücksichtigung des Massenstroms linear bis zum Ende der Totzeit, sodass der Zeitpunkt, zu dem das Schneidelement betätigt werden muss, genauer bestimmt werden kann und gleichzeitig ein zuverlässiges Portionieren des Teigbandes erreicht wird.

Es kann vorgesehen sein, dass die Steuereinheit basierend auf einem Vergleich zwischen dem bestimmten Massenstrom und einem Grenzwert das Schneidelement zum Schneiden des Teigbands steuert oder blockiert. Mit dieser Ausführungsform ist ein Erkennen von Fehlern beim Transport des Teigbandes oder der Teigstücke möglich, sodass das Betätigen des Schneidelements unterbunden werden kann, um das Zuschneiden falsch portionierter Teigstücke zu vermeiden.

In einer Ausführungsform gibt die Steuereinheit eine Information an einen Bediener aus, wenn der bestimmte Massenstrom größer als der Grenzwert ist. Hierdurch kann bspw. eine Fehlerbeseitigung durch einen Bediener ausgelöst werden.

Es kann vorgesehen sein, dass die Steuereinheit den Massenstrom basierend auf allen nach einer Betätigung des Schneidelements bestimmten Gewichtswerten bestimmt. Die Zuverlässigkeit beim Bestimmen des Massenstroms und damit der Betätigung des Schneidelements zum Zuschneiden des Teigstücks kann hiermit erhöht werden.

Ein Messen eines Gewichtswerts eines zweiten Teigstücks kann in einer Ausführungsform ausgeführt werden, nachdem ein erstes Teigstück aus der ersten Wiegeeinheit abtransportiert wurde und/oder das Messen des Gewichtswerts des zweiten Teigstücks kann nach Ablauf einer Wartezeit, die nach dem Messen des Gewichtswerts des ersten Teigstücks abgelaufen ist, erfolgen. Mit dieser Ausführungsform wird ein Leerfahren des ersten Wiegebereichs sichergestellt, sodass zuverlässig der Massenstrom eines noch nicht zugeschnittenen Bereichs des Teigbandes erreicht werden kann.

Sämtliche hier beschriebene Ausführungsformen können miteinander kombiniert werden

### Kurze Beschreibung der Figuren

- Fig. 1: zeigt eine schematische Ansicht einer Teigschneidevorrichtung gemäß einer Ausführungsform.
- Fig. 2 und 3: zeigen verschiedene Ausführungsformen der Messung und Extrapolation eines Teigstücks.
- Fig. 4: zeigt eine Ausführungsform eines Verfahrens zum Zuschneiden eines Teigbands.
- Fig. 5: zeigt eine weitere Ausführungsform eines Verfahrens zum Zuschneiden eines Teigbands.

### Ausführliche Beschreibung

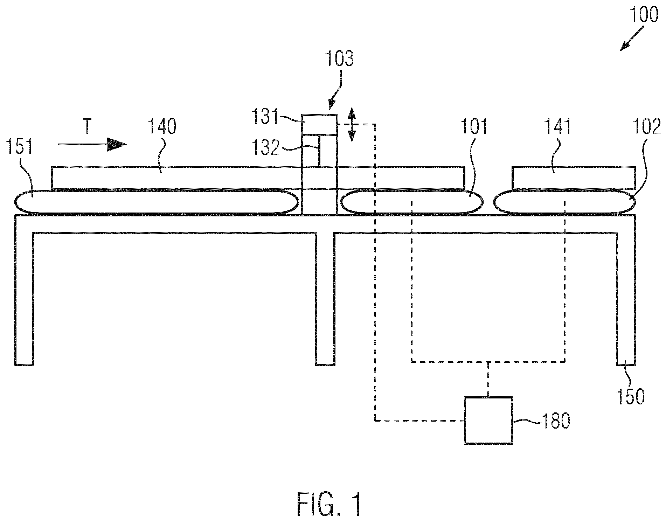

Figur 1 zeigt eine Teigschneidevorrichtung 100 gemäß einer Ausführungsform. Der grundsätzliche Aufbau von Teigschneidevorrichtungen ist aus dem Stand der Technik bekannt. Diese können einen Rahmen 150 umfassen, an dem mehrere Komponenten angeordnet sind, um ein Teigband 140 in Transportrichtung T zu transportieren und in Teigstücke 141 zu trennen.

Dazu kann die Teigschneidevorrichtung 100 eine Schneideinrichtung 103 umfassen, die ein betätigbares und bspw. entlang der dargestellten Doppelpfeilrichtung bewegbares Schneidelement 132, wie bspw. ein Messer, umfasst. Die Schneideinrichtung 103 kann ein Antriebselement 131 (bspw. einen Servomotor oder ein Pneumatikelement oder ähnliches) umfassen, dass mit dem Schneidelement 132 verbunden ist und durch dessen Betätigung das Schneidelement 132 in Bewegung versetzt werden kann, um von bspw. einer Ruheposition, in der es nicht mit einem Teigband 140 in Kontakt kommt, in eine Schneidposition bewegt werden, bei der das Schneidelement 132 eine Bewegung durch das Teigband 140 hindurch erfährt.

In der in Figur 1 dargestellten Ausführungsform ist die Schneideinrichtung 103 lediglich beispielhaft als Guillotine ausgestaltet, sodass das Schneidelement 132 bspw. ein Messer mit einer scharfen Schneidkante an dessen in Richtung des Teigbandes 140 weisender unteren Kante umfasst.

Es kann alternativ auch vorgesehen sein, dass das Schneidelement 132 in der in Figur 1 gezeigten Ansicht von unterhalb des Teigbandes 140 in Richtung nach oben bewegt werden kann, sodass das Schneidelement 132 das Teigband von unten beginnend durchtrennt. Die Erfindung ist hinsichtlich der Ausgestaltung des Schneidelements nicht beschränkt.

Die Teigschneidevorrichtung 100 kann eine stromauf der Schneideinrichtung 103 angeordnete Transporteinrichtung 151 umfassen, die bspw. als Transportband ausgebildet sein kann und das Teigband 140 in Richtung der Schneideinrichtung 103 transportieren kann. Die Transporteinrichtung 151 kann sich dabei durch den Bereich der Schneideinrichtung 103 hindurch erstrecken, in dem ein Schneiden des Teigbandes in einzelne Teigstücke 121 bewirkt wird, oder kann sich nicht in diesen Bereich der Schneideinrichtung 103 erstrecken.

Stromab der Schneideinrichtung 103 kann eine erste Wiegeeinheit 101 angeordnet sein, die zum einen einen Transport des Teigbandes und/oder eines auf diesem befindlichen Teigstück 141 des Teigbandes bewirken kann und zum anderen so ausgestaltet ist, dass auf dem ersten Wiegebereich angeordneter Teig gewogen werden kann. Hierzu kann der ersten Wiegeeinheit 101 bspw. eine Wiegezelle zugeordnet sein oder sie kann eine solche Wiegezelle umfassen, die ein Bestimmen der Gewichtskraft des auf der ersten Wiegeeinheit angeordneten Teigs eventuell unter Berücksichtigung der Masse der Wiegeeinheit selbst oder eines Teils davon (bspw. des Transportbandes) ermöglicht.

Stromab der ersten Wiegeeinheit 101 kann optional eine zweite Wiegeeinheit 102 angeordnet sein, die analog zur ersten Wiegeeinheit ausgestaltet sein kann. Auch hier kann ein Bestimmen eines Gewichtswerts eines Teigstücks 141 oder eines Teils des Teigbandes erfolgen. In einer Ausführungsform ist vorgesehen, dass ein Gewicht eines stromab der Schneideinrichtung 103 angeordneten Teils des Teigbands oder eines Teigstücks aus den bestimmten Gewichtswerten der ersten Wiegeeinheit 101 und der zweiten Wiegeeinheit 102 bestimmt wird, indem bspw. der für ein Teigstück gemessene Gewichtswert auf der zweiten Wiegeeinheit 102 als Korrekturwert für den auf der ersten Wiegeeinheit 101 bestimmten Gewichtswert dieses Teigstücks verwendet wird. Alternativ oder zusätzlich kann vorgesehen sein, dass für den Fall, dass ein Zuschneiden eines Teigstücks aus dem Teigband 140 eine Größe des Teigstücks erfordert, die bewirkt, dass sich dieses Teigstück vor dem Zuschneiden sowohl in der ersten Wiegeeinheit als auch in der zweiten Wiegeeinheit befindet, eine Kombination (bspw. Summe) des mit der ersten Wiegeeinheit gemessenen Gewichtswerts des Teigstücks des Teigbands und dem mit der zweiten Wiegeeinheit gemessenen Gewichtswert des Teigstücks des Teigbands bestimmt wird.

Erfindungsgemäß umfasst die Teigschneidevorrichtung 100 weiterhin eine Steuereinheit 180. Die Steuereinheit kann bspw. als Computer ausgestaltet sein und über drahtlose oder kabelgebundene Datenverbindungen zum Austausch von Steuersignalen und/oder Informationen sowohl mit der ersten Wiegeeinheit 101, als auch mit der zweiten Wiegeeinheit 102 (sofern vorgesehen) und mit dem Schneidelement 132 bzw. der Schneideinrichtung 103 verbunden sein. Insbesondere kann die Steuereinheit ausgestaltet sein, das Schneidelement 132 zum Schneiden des Teigbandes 140 zu steuern, indem bspw. das dem Schneidelement 132 zugeordnete Antriebselement 131 durch die Steuereinheit 180 angesteuert wird, um eine Bewegung des Schneidelements 132 zu bewirken.

Erfindungsgemäß ist ferner vorgesehen, dass die Steuereinheit aus wenigstens zwei wenigstens von der ersten Wiegeeinheit 101 oder der zweiten Wiegeeinheit 102 bestimmten Gewichtswerten eines noch nicht von dem Teigband abgetrennten Teigstücks des Teigbands einen Massenstrom an Teig durch das Schneidelement hindurch in Transportrichtung T bestimmt. Der Massenstrom entspricht dabei im Wesentlichen der zeitlichen Ableitung der sich während des Transports des Teigbandes über den ersten Wiegebereich erstreckenden Teigmasse. Die Steuereinheit kann diesen Massenstrom bspw. als nummerische Ableitung aus den wenigstens zwei bestimmten Gewichtswerten des Teigstücks in der ersten Wiegeeinheit und/oder in der zweiten Wiegeeinheit oder Kombinationen davon bestimmen.

Bevorzugt wird dazu nach einem ersten Schneidvorgang ein Teigstück, das sich noch zumindest teilweise auf bzw. in der ersten Wiegeeinheit 101 befindet, abtransportiert und/oder der Transport des noch stromauf der Schneideinrichtung befindlichen restlichen Teigbands angehalten. Es befindet sich dann keine Masse mehr auf der ersten Wiegeeinheit 101. Dies kann bspw. dadurch bestätigt werden, dass die gesamte Masse des abtransportierten Teigstücks auf der zweiten Wiegeeinheit 102 erfasst wird und eine entsprechende Information dieses Gewichtswerts an die Steuereinheit 180 übergeben wird. Diese kann dann feststellen, dass das Teigstück, das zugeschnitten wurde, vollständig auf bzw. in der zweiten Wiegeeinheit ist und bspw. durch Kontrolle bzw. Vergleich mit dem durch die erste Wiegeeinheit 101 zu derselben Zeit gemessenen Gewichtswert feststellen, dass die erste Wiegeeinheit 101 im Wesentlichen frei von Teig ist.

Anschließend kann die Steuereinheit bspw. die Transporteinrichtung 151 ansteuern, sodass diese den Transport des Teigbandes 140 durch die Schneideinrichtung 103 in Richtung der ersten Wiegeeinheit 101 fortsetzt. Damit erhöht sich während des Transports des Teigbandes 140 in Richtung der ersten Wiegeeinheit 101 die auf der ersten Wiegeeinheit 101 befindliche Masse, sodass bei einem Bestimmen des Gewichtswerts mittels der ersten Wiegeeinheit 101 die Masse abhängig von der verstrichenen Zeit ansteigen wird.

Aus wenigstens zwei oder auch einer Vielzahl von bestimmten Gewichtswerten der ersten Wiegeeinheit 101 kann dann die Steuereinheit den Massenstrom bestimmen und den bestimmten Massenstrom bspw. im Rahmen einer Extrapolation für die sich auf der ersten Wiegeeinheit 101 und/oder der zweiten Wiegeeinheit 102 befindliche Masse des Teigbandes nutzen, um das Schneidelement zum Schneiden des Teigbands zu steuern.

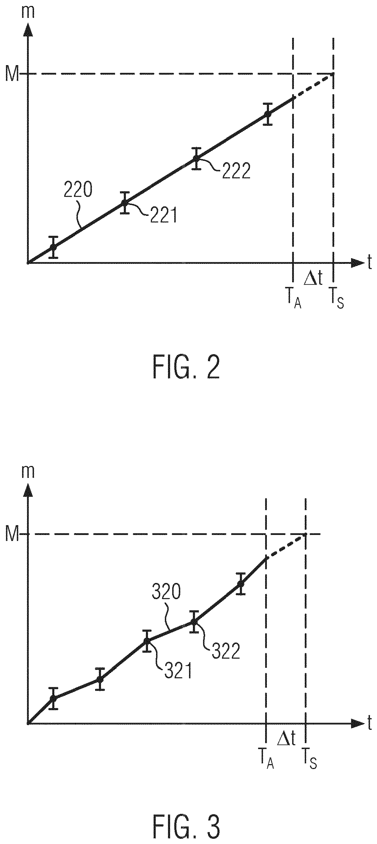

Die Figuren 2 und 3 zeigen verschiedene Darstellungen des zeitlichen Verlaufs der gemessenen Gewichtswerte (vertikale Achse bezeichnet mit M) eines Teigbandes, wie sie bspw. durch die erste Wiegeeinheit 101 bestimmt werden.

In der in Figur 2 dargestellten Ausführungsform ist das Teigband homogen und weist insbesondere nur geringfügige oder keine Dickeschwankungen oder Schwankungen der Breite des Teigbandes quer zur Transportrichtung auf. Auch Unregelmäßigkeiten des Teigs (wie bspw. Lufteinschluss oder Konzentrationen von festen Bestandteilen wie Mehl) treten hier nicht auf. Bei konstanter Transportgeschwindigkeit des Teigbandes hängt die Gesamtmasse auf bzw. in der bspw. ersten Wiegeeinheit dann linear von der verstrichenen Zeit ab.

Da beim Zuschneiden von Teigstücken gewünscht ist, dass jedes Teigstück möglichst dieselbe Masse (bspw. ein vorgegebenes Zielgewicht) besitzt, ist es vorteilhaft, wenn dieses Zielgewicht möglichst genau erreicht und möglichst vorherbestimmt werden kann. Wie bereits im Zusammenhang mit der Figur 1 beschrieben, erfordert das Zuschneiden eines Teigstücks aus einem Teigband ein Betätigen eines Schneidelements, dass dann durch eine Bewegung ein Schneiden des Teigbandes und damit Abtrennen eines Teigstücks bewirkt. Gleichzeitig kann ein Anhalten der Transporteinrichtung erfolgen, um einen geraden Schnitt zu erzielen.

Zwischen dem Betätigen des Schneidelements durch die Steuereinheit und dem tatsächlichen Durchtrennen des Teigbandes vergeht jedoch eine gewisse Zeit, während der das Teigband üblicherweise weitertransportiert und noch nicht geschnitten wird. Die Betätigung des Schneidelements wird dabei üblicherweise durch das Erreichen eines bestimmten Gewichts des auf der ersten Wiegeeinheit angeordneten Teigs ausgelöst. Jedoch vergeht dann eine gewisse Zeit (nachfolgend auch Totzeit genannt) zwischen dem Auslösen des Schneidelements und/oder dem Stoppen des Transports des Teigbandes durch die Steuereinheit selbst (in der Figur 2 mit der Zeit T_{A} bezeichnet) und dem tatsächlichen Schneidvorgang zur Zeit T_{S}. Die zeitliche Differenz Δt = T_{S}-T_{A} ist die Totzeit, während der trotz Auslösen des Schneidvorgangs und/oder einem Signalisieren, dass der Transport des Teigs durch die Transporteinrichtung gestoppt werden soll, immer noch ein Transport des Teigbandes in Transportrichtung T durch die Schneideinrichtung 103 erfolgt. Dies bewirkt letztlich eine Zunahme der Masse des zu schneidenden Teigstücks noch während der Totzeit.

Erfindungsgemäß können nun die vor der Zeit T_{A} gemessenen Gewichtswerte (bspw. die Gewichtswerte 221 und 222) genutzt werden, um den Verlauf der Masse abhängig von der Zeit (hier dargestellt als die lineare Funktion 220) in den Bereich der Totzeit ΔT zu extrapolieren. Hierzu können bspw. die zuletzt gemessenen zwei Gewichtswerte genutzt werden und eine lineare Regression (beispielsweise unter Bestimmung einer nummerischen Ableitung der Funktion 220) verwendet werden, um die Entwicklung der Gewichtswerte in der Totzeit vorherzusagen bzw. zu extrapolieren. Wird für einen aktuell zur Zeit T_{A} gemessenen Gewichtswert basierend auf diesem Gewichtswert und dem unmittelbar vorher bestimmten Gewichtswert dabei erkannt, dass am Ende der Totzeit (T_{S}) die Masse M des zu schneidenden Teigstücks gleich einer Zielmasse M ist, kann dann zur Zeit T_{A} die Steuereinheit das Schneidelement betätigen. Am Ende der Totzeit Δt, an der das Teigstück tatsächlich vom Teigband abgetrennt wurde, wird es dann mit vergleichsweise hoher Genauigkeit die gewünschte Zielmasse M aufweisen. Wird stattdessen von der Steuereinheit zur Zeit T_{A} festgestellt, dass ausgehend von dem aktuellen Gewichtswert und unter Berücksichtigung der Totzeit das Teigstück eine geringere Masse aufweist, kann vorgesehen sein, dass die Steuereinheit das Schneidelement nicht betätigt und der Transport des Teigbands kann zunächst weiter erfolgen.

In Figur 3 ist ein zur Figur 2 analoges Beispiel gezeigt, bei dem jedoch der Verlauf der Gewichtswerte m abhängig von der Zeit t keinen linearen Zusammenhang zeigt, sondern einen komplexeren funktionalen Zusammenhang 320 besitzt, der aus einer Vielzahl von Gewichtswerten 321 und 322 bestimmt wurde. Bspw. kann eine Abweichung der Zunahme der Masse abhängig von der Zeit auf der Wiegeeinheit durch Verunreinigungen auf der Wiegeeinheit bewirkt werden. Auch Schwankungen im Teigband selbst (bspw. hinsichtlich der Dicke des Teigbands oder Lufteinschlüssen oder ungleichmäßiger Verteilung fester Bestandteile, wie etwa Mehl, in dem Teigband) können zu Abweichungen in dem linearen Verlauf der Figur 2 führen.

Es kann vorgesehen sein, dass anhand einer Vielzahl (wenigstens zwei) von gemessenen Gewichtswerten 321 und 322 (bspw. alle gemessenen Gewichtswerte, die nach dem letzten Schneidvorgang des Schneidelements gemessen wurden) eine Regressionskurve bestimmt wird, die den Verlauf der Gewichtswerte möglichst gut reproduziert. Für einen aktuell gemessenen Gewichtswert kann dann analog zur Figur 2 durch Bestimmen des Massenstroms als nummerische Ableitung der dargestellten Funktion 320 zu dem Zeitpunkt, an dem der aktuelle Gewichtswert gemessen wurde (beispielsweise die Zeit T_{A}), eine lineare Extrapolation der Entwicklung der Masse des Teigbandes während der Totzeit Δt erfolgen. Wird für den aktuell gemessenen Gewichtswert hieraus ermittelt, dass die Zielmasse M des Teigstücks am Ende der Totzeit erreicht wird, kann dann zur Zeit T_{A} das Schneidelement zum Schneiden des Teigbands gesteuert werden. Andernfalls kann der Transport des Teigbands ohne Betätigen des Schneidelements weiter erfolgen.

Während in der Figur 2 eine zuverlässige Vorhersage der Entwicklung der Gewichtswerte des Teigbands unter Berücksichtigung von lediglich zwei Gewichtswerten möglich ist, ist dies in der Figur 3 nur mit geringerer Genauigkeit möglich. Anstelle des Erstellens einer Regressionskurve kann jedoch vorgesehen sein, dass ein Massenstrom für jeweils zwei gemessene Gewichtswerte, die unmittelbar nacheinander gemessen wurden, bestimmt wird und für das Steuern des Schneidelements ein Mittelwert aus allen bestimmten Massenströmen genutzt wird.

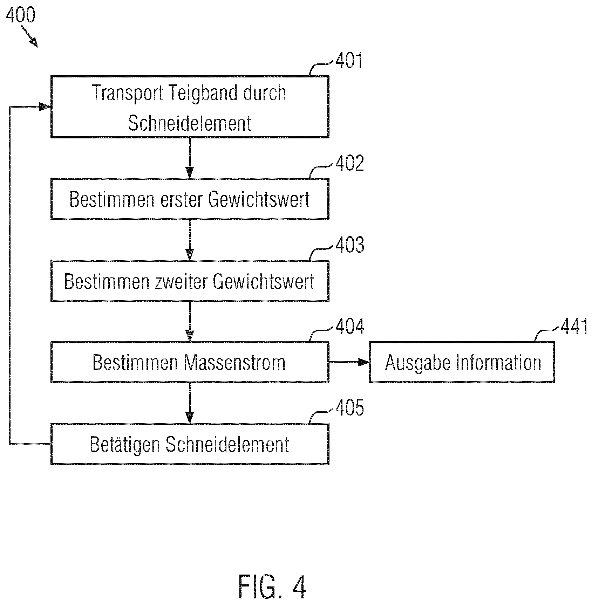

Figur 4 zeigt ein Fließschema einer Ausführungsform eines Verfahrens zum Schneiden eines Teigbandes. Das Verfahren 400 umfasst als einleitenden Schritt 401 den Transport des Teigbandes durch das Schneidelement bzw. die Schneideinrichtung in Richtung der ersten Wiegeeinheit. Wie bereits erwähnt, kann vorgesehen sein, dass die erste Wiegeeinheit von dem zuletzt zugeschnittenen Teigstück zunächst befreit wird, indem dieses aus der ersten Wiegeeinheit abtransportiert wird, und erst anschließend ein Transport des Teigbandes durch das Schneidelement bzw. die Schneideinrichtung hindurch im Schritt 401 in Richtung der ersten Wiegeeinheit erfolgt.

Durch Weitertransport des Teigbandes nimmt dann die Masse auf der ersten Wiegeeinheit weiter zu, sodass mit der Zeit verschiedene Gewichtswerte bestimmt werden können. Im Beispiel der Figur 4 wird zunächst ein erster Gewichtswert bestimmt 402 und nach Verstreichen einer bestimmten Zeit (bspw. wenigen Millisekunden) erfolgt das Bestimmen eines zweiten Gewichtswerts 403. Die erste Wiegeeinheit (und sofern vorhanden auch die zweite Wiegeeinheit) kann ausgestaltet sein, einen Gewichtswert periodisch zu bestimmen (bspw. alle 10 ms oder alle 50 ms oder alle 100 ms). Die Erfindung ist also nicht auf das Bestimmen eines ersten und eines zweiten Gewichtswerts beschränkt und bei dem ersten Gewichtswert und dem zweiten Gewichtswert muss es sich auch nicht um unmittelbar aufeinanderfolgende Gewichtswerte handeln.

Jedoch werden erfindungsgemäß zumindest zweit Gewichtswerte (hier nur beispielhaft der erste Gewichtswert und der unmittelbar darauffolgend bestimmte zweite Gewichtswert) in Schritt 404 genutzt, um den Massenstrom des Teigbandes zu bestimmen. Dieser kann dann in Schritt 405 genutzt werden, um basierend auf dem Massenstrom und bspw. einem gemessenen Gewichtswert (wie oben bereits beschrieben) das Teigband zu Schneiden bzw. das Schneidelement zu betätigen, um so ein Teigstück von dem Teigband zu trennen.

Der Massenstrom kann dabei grundsätzlich beliebige Werte annehmen. Es ist jedoch beim Betrieb einer Teigschneidevorrichtung zu erwarten, dass der Massenstrom bei ordnungsgemäßer Zuführung eines Teigbandes bestimmte Maximalwerte oder Minimalwerte nicht überschreiten bzw. unterschreiten wird. Es kann daher im Zusammenhang mit Ausführungsformen vorgesehen sein, dass ein im Schritt 404 bestimmter Massenstrom mit einem Grenzwert des Massenstroms verglichen wird und basierend auf dem Ergebnis dieses Vergleichs das Schneidelement zum Schneiden des Teigbandes im Schritt 405 entweder angesteuert wird oder das Schneidelement zunächst blockiert wird.

Bspw. kann ein maximaler Wert für den Massenstrom in der Steuereinheit oder einem zugeordneten Speicher hinterlegt sein. Wird bspw. bei einem Abtransport eines vorausgegangenen Teigstücks ein Teil des Teigs gelöst und zwischen der ersten Wiegeeinheit und der zweiten Wiegeeinheit (siehe Figur 1) eingeklemmt, kann dies zu einer auf die erste Wiegeeinheit und/oder die zweite Wiegeeinheit wirkenden Kraft führen, die von der Wiegeeinheit selbst nicht von einer wirkenden Gewichtskraft unterschieden werden kann. Da das Teigstück verglichen mit dem kontinuierlichen Transport des Teigbandes nur plötzlich eine Erhöhung der auf die Wiegeeinheit wirkenden Kraft bewirkt (etwa dann, wenn das Teigstück bspw. zwischen der ersten Wiegeeinheit und der zweiten Wiegeeinheit eingeklemmt wird), wird zu diesem Zeitpunkt der bestimmte Massenstrom möglicherweise über dem Grenzwert liegen.

Diese Feststellung kann von der Steuereinheit dann genutzt werden, um das Schneidelement nicht zu betätigen, sondern den weiteren Betrieb und insbesondere das Schneiden durch das Schneidelement zu blockieren.

Der Vergleich des Massenstroms mit einem Grenzwert kann hier auch vorteilhaft genutzt werden, um zumindest indirekt die Möglichkeit des Eingreifens eines Bedieners in den Betrieb der Teigschneidevorrichtung zu erkennen und ein Schneiden des Teigbands durch Betätigen des Schneidelements zu unterbinden, um hier das Verletzungsrisiko des Bedieners zu reduzieren.

Alternativ oder zusätzlich zum Blockieren des Schneidelements kann im Schritt 441 auch eine Ausgabe von Informationen an einen Bediener erfolgen, wobei bspw. angezeigt werden kann, dass der bestimmte Massenstrom oberhalb eines maximalen Grenzwerts oder unterhalb eines minimalen Grenzwerts bzw. außerhalb eines für den Massenstrom akzeptablen Wertebereichs liegt. Der Bediener kann dann bspw. auch aufgefordert werden, die erste Wiegeeinheit und/oder die zweite Wiegeeinheit zu prüfen oder zu reinigen, um so einen ordnungsgemäßen Betrieb sicherzustellen.

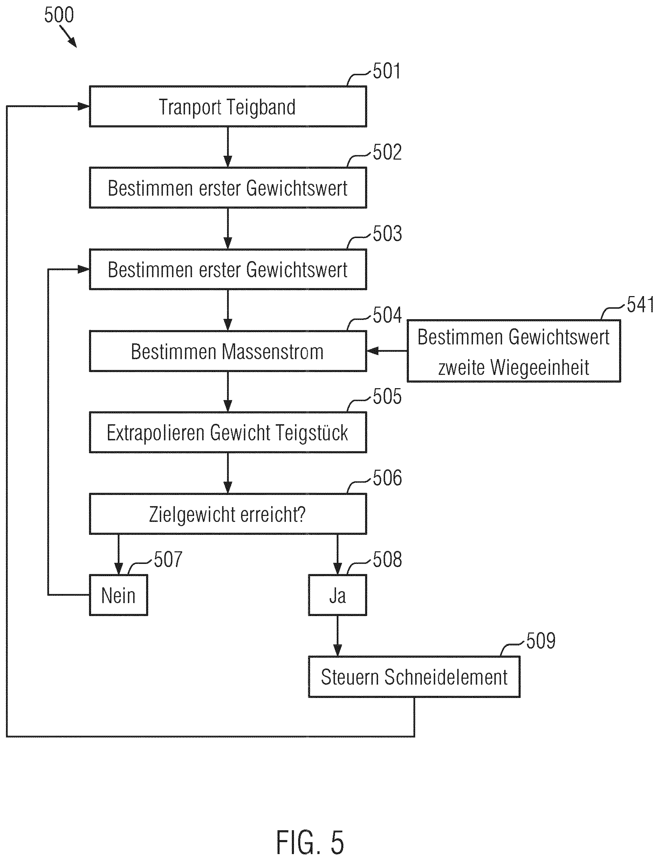

Figur 5 zeigt ein weiteres Fließschema eines Verfahrens 500 gemäß einer Ausführungsform.

Auch in dieser Ausführungsform kann zunächst vorgesehen sein, dass die erste Wiegeeinheit und/oder die zweite Wiegeeinheit von einem zuletzt zugeschnittenen Teigstück geleert werden und anschließend ein Transport des Teigbandes im Schritt 501 in Richtung der ersten Wiegeeinheit durch das Schneidelement bzw. die Schneideinrichtung (siehe Figur 1) hindurch erfolgt.

Anschließend können sukzessive erste Gewichtswerte und zweite Gewichtswerte 502 und 503 zumindest in der ersten Wiegeeinheit bestimmt werden. Es kann vorgesehen sein, dass das zuzuschneidende Teigstück eine Zielmasse haben soll, die so groß ist, dass das Teigstück vor dem Zuschneiden auch in die zweite Wiegeeinheit eindringt und somit das Gesamtgewicht des Teigbandes bzw. des zuzuschneidenden Teigstücks sich aus den Gewichtswerten, die in der ersten Wiegeeinheit gemessen werden, und dem oder den Gewichtswerten, die in der zweiten Wiegeeinheit gemessen werden, zusammensetzen kann. Dies ist hier optional im Schritt 541 gezeigt, in dem ein Gewichtswert der zweiten Wiegeeinheit bestimmt wird.

Die ersten und zweiten Gewichtswerte, die aus der ersten Wiegeeinheit bestimmt wurden, und optional der wenigstens eine Gewichtswert, der in der zweiten Wiegeeinheit bestimmt wurde, können dann genutzt werden, um einen Massenstrom im Schritt 504 zu bestimmen. Dieser Massenstrom kann bspw. durch lineare Regressionen (wie im Zusammenhang mit der Figur 2 beschrieben) oder durch Bestimmen einer nummerischen Ableitung zu einem bestimmten Zeitpunkt (wie bspw. in den Figuren 2 und 3 beschrieben) erlangt werden.

Anschließend kann der so bestimmte Massenstrom zu einer gegebenen Zeit im Schritt 505 genutzt werden, um das Gewicht des zuzuschneidenden Teigstückes in eine zukünftige Zeit zu extrapolieren. Das Extrapolieren im Schritt 505 kann bspw. zu der Zeit, an der der letzte für das Bestimmen des Massenstroms verwendete Gewichtswert erlangt wird (bspw. zu dem Zeitpunkt, an dem der zweite Gewichtswert bestimmt wird 503), erfolgen und zumindest einen Zeitraum umfassen, der der Totzeit des Schneidelements entspricht (siehe vorangegangene Ausführungsformen und Beschreibung zur Figur 1 und 2 sowie 3). Ausgehend von einer aktuellen Messung erfolgt also eine Voraussage des Gewichts des zuzuschneidenden Teigstücks im Schritt 505 unter Berücksichtigung des Massenstroms, der bei (kontinuierlichem) Transport des Teigbandes durch die Schneideinrichtung transportiert wird.

Im Schritt 506 kann dann von der Steuereinheit bestimmt werden, ob unter Berücksichtigung der Extrapolation des Teigstücks am Ende des Schneidvorgangs (also wenn das Schneidelement tatsächlich das Teigband durchtrennen würde, um ein Teigstück abzutrennen) ein vorgegebenes Zielgewicht erreicht wird. Das Zielgewicht kann das Zielgewicht des abzutrennenden Teigstücks sein und entweder für alle zu erstellenden Teigstücke konstant sein oder für jedes Teigstück separat vorgegeben werden.

Wird festgestellt, dass das Zielgewicht am Ende der Totzeit noch nicht erreicht ist 507, kann der Transport des Teigbandes weiter erfolgen und zumindest zu einer nachfolgenden Zeit ein weiterer Gewichtswert im Schritt 503 und/oder im Schritt 541 bestimmt werden. Anschließend erfolgt eine erneute Bestimmung des Massenstroms und Extrapolation des Gewichts des Teigstücks in den Schritten 504 und 505 und im Schritt 506 eine erneute Überprüfung, ob bei Betätigen des Schneidelements zu diesem Zeitpunkt das Zielgewicht erreicht werden wird.

Auf diese Weise wird sukzessive mehr Teig durch die Schneideinrichtung hindurch transportiert und das zuzuschneidende Teigstück wird immer größer und massereicher. Es nähert sich damit zwangsläufig von kleineren Massen der Zielmasse und wird entsprechend nach Durchlaufen einer gewissen Anzahl von Wiederholungen der Schritte 503 bis 507 das Zielgewicht erreichen.

Unabhängig von der Anzahl der Durchläufe, die hierfür erforderlich sind, wird dann im Schritt 506 zu einer bestimmten Zeit festgestellt, dass das Zielgewicht am Ende der Totzeit erreicht werden wird 508. Anschließend kann dann im Schritt 509 die Steuereinheit zu diesem Zeitpunkt das Schneidelement ansteuern, um ein Schneiden des Teigbandes und damit Abtrennen des Teigstücks zu bewirken.

Analog zur Beschreibung der Figur 4 kann auch hier vorgesehen sein, dass eine Überprüfung des Massenstroms erfolgt, um bspw. festzustellen, ob eine Verunreinigung einer oder mehrerer Wiegeeinheiten oder eine sonstige Beeinträchtigung der Teigschneidevorrichtung vorliegt. Nach dem Steuern des Schneidelements im Schritt 509 kann dann erneut ein Leerfahren der ersten Wiegeeinheit und/oder der zweiten Wiegeeinheit erfolgen, sodass das zugeschnittene Teigstück abtransportiert wird, und anschließend der Transport des Teigbandes im Schritt 501 erneut beginnen. Nachfolgende Schneidvorgänge von Teigstücken können, wie bereits beschrieben, mit unterschiedlichen Zielgewichten erfolgen, sodass bspw. ein erstes Teigstück mit einem ersten Zielgewicht (bspw. 350g) zugeschnitten werden kann und ein nachfolgendes Teigstück (nicht zwingend das unmittelbar nachfolgende) mit einem anderen Zielgewicht (bspw. von 475g) zugeschnitten werden.

Während der Vergleich mit dem Zielgewicht im Schritt 506 unter Verwendung einer Extrapolation nur allgemein beschrieben wurde, ist erfindungsgemäß vorgesehen, dass das Zielgewicht mit dem extrapolierten Gewicht des Teigstücks verglichen wird, indem die Differenz aus dem Zielgewicht und einer Summe aus dem zuletzt bestimmten Gewichtswert (bspw. dem zweiten Gewichtswert 503 oder dem bestimmten Gewichtswert der zweiten Wiegeeinheit 541) und dem Produkt aus dem bestimmten Massenstrom und der Totzeit gebildet wird. Ist diese Differenz positiv, liegt das extrapolierte Gewicht des Teigstücks unterhalb des Zielgewichts. Ist sie negativ, so ist das extrapolierte Gewicht des Teigstücks größer als das Zielgewicht.

## Patentansprüche

1. Teigschneidevorrichtung (100) zum Zuschneiden eines Teigbands (140), die Teigschneidevorrichtung (100) umfassend ein Schneidelement (132) zum Schneiden eines Teigbands (140), eine stromab des Schneidelements (132) angeordnete, erste Wiegeeinheit (101) zum Bestimmen eines Gewichtswerts eines Teigstücks (141) des Teigbands (140), und eine Steuereinheit (180), wobei die Steuereinheit (180) ausgebildet ist, basierend auf wenigstens zwei nacheinander bestimmten Gewichtswerten eines Teigstücks (141) einen Massenstrom des Teigbands zu bestimmen (404) und basierend auf wenigstens einem der bestimmten Gewichtswerte und dem bestimmten Massenstrom das Schneidelement (132) zum Schneiden des Teigbands zu steuern (405),
**gekennzeichnet dadurch, dass** durch Berücksichtigung des Massenstroms ein Produktgewicht, das insgesamt erhalten wird, wenn bei einem gegebenen Gewichtswert das Schneidelement betätigt wird, in den Bereich einer Totzeit des Schneidelements extrapoliert werden kann, wobei die Steuereinheit (180) ausgebildet ist, das Schneidelement (132) zum Schneiden des Teigbands (140) basierend auf der Totzeit des Schneidelements (132) zu steuern, wobei die Steuereinheit (180) ausgebildet ist, basierend auf einem Vergleich eines Zielgewichts des Teigstücks mit einer Summe aus einem zuletzt bestimmten Gewichtswert und dem Produkt aus Massenstrom und Totzeit das Schneidelement (132) zum Schneiden des Teigbands (140) zu steuern.

2. Teigschneidevorrichtung (100) nach Anspruch 1, wobei die Teigschneidevorrichtung (100) eine zweite Wiegeeinheit (102) zum Bestimmen (541) eines Gewichtswerts eines Teigstücks des Teigbands (140) umfasst und die Steuereinheit (180) ausgebildet ist, den Massenstrom basierend auf den wenigstens zwei nacheinander bestimmten Gewichtswerten eines Teigstücks und wenigstens einem zweiten Gewichtswert eines Teigstücks, der von der zweiten Wiegeeinheit gemessen wird, zu bestimmen (504).

3. Teigschneidevorrichtung (100) nach einem der Ansprüche 1 bis 2, wobei die Steuereinheit (180) ausgebildet ist, basierend auf einem Vergleich zwischen dem bestimmten Massenstrom und einem Grenzwert das Schneidelement (132) zum Schneiden des Teigbands (140) zu steuern oder zu blockieren.

4. Teigschneidevorrichtung (100) nach Anspruch 3, wobei die Steuereinheit (180) ausgebildet ist, eine Information an einen Bediener auszugeben (441), wenn der bestimmte Massenstrom größer als der Grenzwert ist.

5. Teigschneidevorrichtung (100) nach einem der Ansprüche 1 bis 4, wobei die Steuereinheit (180) ausgebildet ist, den Massenstrom basierend auf allen nach einer Betätigung des Schneidelements (132) bestimmten Gewichtswerten zu bestimmen.

6. Verfahren zum Zuschneiden eines Teigbands (140) mit einer Teigschneidevorrichtung (100) zum Zuschneiden des Teigbands (140), die Teigschneidevorrichtung (100) umfassend ein Schneidelement (132) zum Schneiden des Teigbands (140), eine stromab des Schneidelements (132) angeordnete, erste Wiegeeinheit (101) zum Bestimmen eines Gewichtswerts eines Teigstücks (141) des Teigbands (140), und eine Steuereinheit (180), wobei das Verfahren umfasst, dass die Steuereinheit (180) basierend auf wenigstens zwei nacheinander bestimmten Gewichtswerten des Teigstücks (141) einen Massenstrom des Teigbands bestimmt (404) und basierend auf wenigstens einem der bestimmten Gewichtswerte und dem bestimmten Massenstrom das Schneidelement (132) zum Schneiden des Teigbands steuert (405),
**gekennzeichnet dadurch, dass** durch Berücksichtigung des Massenstroms ein Produktgewicht, das insgesamt erhalten wird, wenn bei einem gegebenen Gewichtswert das Schneidelement betätigt wird, in den Bereich einer Totzeit des Schneidelements extrapoliert werden kann, wobei die Steuereinheit (180) das Schneidelement (132) zum Schneiden des Teigbands (140) basierend auf der Totzeit des Schneidelements (132) steuert, wobei die Steuereinheit (180) basierend auf einem Vergleich (506) eines Zielgewichts des Teigstücks mit einer Summe aus einem zuletzt bestimmten Gewichtswert und dem Produkt aus Massenstrom und Totzeit das Schneidelement (132) zum Schneiden des Teigbands steuert (509).

7. Verfahren nach Anspruch 6, wobei die Teigschneidevorrichtung (100) eine zweite Wiegeeinheit (102) zum Bestimmen eines Gewichtswerts des Teigstücks (141) des Teigbands (140) umfasst und die Steuereinheit (180) den Massenstrom basierend auf den wenigstens zwei nacheinander bestimmten Gewichtswerten des Teigstücks (141) und wenigstens einem zweiten Gewichtswert des Teigstücks (141), der von der zweiten Wiegeeinheit (102) gemessen wird, bestimmt (504).

8. Verfahren nach einem der Ansprüche 6 bis 7, wobei die Steuereinheit (180) basierend auf einem Vergleich zwischen dem bestimmten Massenstrom und einem Grenzwert das Schneidelement (132) zum Schneiden des Teigbands (140) steuert oder blockiert.

9. Verfahren nach Anspruch 8, wobei die Steuereinheit eine Information an einen Bediener auszugeben (441), wenn der bestimmte Massenstrom größer als der Grenzwert ist.

10. Verfahren nach einem der Ansprüche 6 bis 9, wobei die Steuereinheit (180) den Massenstrom basierend auf allen nach einer Betätigung des Schneidelements (132) bestimmten Gewichtswerten bestimmt.

11. Verfahren nach einem der Ansprüche 6 bis 10, wobei ein Messen eines Gewichtswerts eines zweiten Teigstücks (141) ausgeführt wird, nachdem ein erstes Teigstück aus der ersten Wiegeeinheit (101) abtransportiert wurde und/oder wobei das Messen des Gewichtswerts des zweiten Teigstücks (141) nach Ablauf einer Wartezeit, die nach dem Messen des Gewichtswerts des ersten Teigstücks abgelaufen ist, erfolgt.

## Claims

1. A dough cutting device (100) for cutting a dough sheet (140), the dough cutting device (100) comprising a cutting element (132) for cutting a dough sheet (140), a first weighing unit (101) disposed downstream of the cutting element (132) for acquiring a weight value of a dough piece (141) of the dough sheet (140) and a control unit (180), wherein the control unit (180) is configured to acquire a mass flow of the dough sheet (404) on the basis of at least two subsequently acquired weight values of a dough piece (141) and to control the cutting element (132) for cutting the dough sheet (405) on the basis of at least one of the acquired weight values and the acquired mass flow, **characterized in that** taking into account the mass flow a total product weight obtained when the cutting element is activated at a given weight value, can be extrapolated into the range of a dead time of the cutting element, wherein the control unit (180) is configured to control the cutting element (132) for cutting the dough sheet (140) on the basis of the dead time of the cutting element (132), wherein the control unit (180) is configured to control the cutting element (132) for cutting the dough sheet (140) on the basis of a comparison of a target weight of the dough sheet to a sum of a most recently acquired weight value and the product of the mass flow and the dead time.

2. The dough cutting device (100) according to claim 1, wherein the dough cutting device (100) comprises a second weighing unit (102) for acquiring (541) a weight value of the dough piece off the dough sheet (140) and the control unit (180) is configured to acquire the mass flow on the basis of the at least two subsequently acquired weight values of a dough piece and at least one second weight value of a dough piece measured by the second weighing unit (504).

3. The dough cutting device (100) according to anyone of claims 1 to 2, wherein the control unit (180) is configured to control the cutting element (132) for cutting the dough sheet (140) or blocking the same on the basis of a comparison between the acquired mass flow and a threshold.

4. The dough cutting device (100) according to claim 3, wherein the control unit (180) is configured to output an information to an operator (441) in case the acquired mass flow exceeds the threshold.

5. The dough cutting device (100) according to anyone of claims 1 to 4, wherein the control unit (180) is configured to acquire the mass flow on the basis of all weight values acquired after an activation of the cutting element (132).

6. A method for cutting a dough sheet (140) with a dough cutting device (100) for cutting the dough sheet (140), the dough cutting device (100) comprising a cutting element (132) for cutting the dough sheet (140), a first weighing unit (101) disposed downstream of the cutting element (132) for acquiring a weight value of a dough piece (141) of the dough sheet (140) and a control unit (180), wherein the method comprises the control unit (180) acquiring a mass flow of the dough sheet (404) on the basis of at least two subsequently acquired weight values of the dough piece (141) and controlling the cutting element (132) for cutting the dough sheet (405) on the basis of at least one of the acquired weight values and the acquired mass flow, **characterized in that** taking into account the mass flow a total product weight obtained when the cutting element is activated at a given weight value, can be extrapolated into the range of a dead time of the cutting element, wherein the control unit (180) controls the cutting element (132) for cutting the dough sheet (140) on the basis of the dead time of the cutting element (132), wherein the control unit (180) controls (509) the cutting element (132) for cutting the dough sheet (140) on the basis of a comparison (506) of a target weight of the dough sheet to a sum of a most recently acquired weight value and the product of the mass flow and the dead time.

7. The method according to claim 6, wherein the dough cutting device (100) comprises a second weighing unit (102) for acquiring a weight value of the dough piece (141) of the dough sheet (140) and the control unit (180) acquires the mass flow (504) on the basis of of the at least two subsequently acquired weight values of the dough piece (141) and at least one second weight value of the dough piece (141) measured by the second weighing unit (102).

8. The method according to any one of claims 6 to 7, wherein the control unit (180) controls the cutting element (132) for cutting the dough sheet (140) or blocks the same on the basis of a comparison between the acquired mass flow and a threshold.

9. The method according to claim 8, wherein the control unit outputs an information to an operator (441) in case the acquired mass flow exceeds the threshold.

10. The method according to anyone of claims 6 to 9, wherein the control unit (180) acquires the mass flow on the basis of all weight values acquired after an activation of the cutting element (132).

11. The method according to anyone of claims 6 to 10, wherein a measurement of a weight value of a second dough piece (141) is carried out after a first dough piece has been removed from the first weighing unit (101) and/or wherein the measurement of the weight value of the second dough piece (141) is carried out after a waiting period has expired after measuring the weigth value of the first dough piece.

## Revendications

1. Dispositif de coupe de pâte (100) pour découper une bande de pâte (140), le dispositif de coupe de pâte (100) comprenant un élément de coupe (132) pour découper une bande de pâte (140), une première unité de pesage (101) agencée en aval de l'élément de coupe (132) pour déterminer une valeur de poids d'un morceau de pâte (141) de la bande de pâte (140), et une unité de commande (180), dans lequel l'unité de commande (180) est configurée pour déterminer (404) un débit massique de la bande de pâte sur la base d'au moins deux valeurs de poids déterminées successivement d'un morceau de pâte (141) et pour commander (405) l'élément de coupe (132) pour découper la bande de pâte sur la base d'au moins l'une des valeurs de poids déterminées et du débit massique déterminé,
**caractérisé en ce que**, en prenant en compte le débit massique, le poids total de produit obtenu quand l'élément de coupe est actionné à une valeur de poids donnée peut être extrapolé dans la plage d'un temps mort de l'élément de coupe, dans lequel l'unité de commande (180) est configurée pour commander l'élément de coupe (132) afin de découper la bande de pâte (140) sur la base du temps mort de l'élément de coupe (132), dans lequel l'unité de commande (180) est configurée pour commander l'élément de coupe (132) pour découper la bande de pâte (140) sur la base d'une comparaison entre un poids cible du morceau de pâte et la somme de la dernière valeur de poids déterminée et du produit du débit massique par le temps mort.

2. Dispositif de coupe de pâte (100) selon la revendication 1, dans lequel le dispositif de coupe de pâte (100) comprend une deuxième unité de pesage (102) pour déterminer (541) une valeur de poids d'un morceau de pâte de la bande de pâte (140), et l'unité de commande (180) est configurée pour déterminer (504) le débit massique sur la base d'au moins deux valeurs de poids déterminées successivement d'un morceau de pâte et d'au moins une deuxième valeur de poids d'un morceau de pâte mesurée par la deuxième unité de pesage.

3. Dispositif de coupe de pâte (100) selon l'une des revendications 1 et 2, dans lequel l'unité de commande (180) est configurée pour contrôler ou bloquer l'élément de coupe (132) afin de découper la bande de pâte (140) sur la base d'une comparaison entre le débit massique déterminé et une valeur seuil.

4. Dispositif de coupe de pâte (100) selon la revendication 3, dans lequel l'unité de commande (180) est configurée pour fournir (441) une information à un opérateur quand le débit massique déterminé est supérieur à la valeur seuil.

5. Dispositif de coupe de pâte (100) selon l'une des revendications 1 à 4, dans lequel l'unité de commande (180) est configurée pour déterminer le débit massique sur la base de toutes les valeurs de poids déterminées après un actionnement de l'élément de coupe (132).

6. Procédé de coupe d'une bande de pâte (140) à l'aide d'un dispositif de coupe de pâte (100) pour découper la bande de pâte (140), le dispositif de coupe de pâte (100) comprenant un élément de coupe (132) pour découper la bande de pâte (140), une première unité de pesage (101) agencée en aval de l'élément de coupe (132) pour déterminer une valeur de poids d'un morceau de pâte (141) de la bande de pâte (140), et une unité de commande (180), dans lequel le procédé comprend la détermination (404) d'un débit massique de la bande de pâte par l'unité de commande (180) sur la base d'au moins deux valeurs de poids du morceau de pâte (141) déterminées successivement, et la commande (405) de l'élément de coupe (132) pour découper la bande de pâte sur la base d'au moins l'une des valeurs de poids déterminées et du débit massique déterminé,
**caractérisé en ce que**, en prenant en compte le débit massique, le poids total de produit obtenu quand l'élément de coupe est actionné à une valeur de poids donnée peut être extrapolé dans la plage d'un temps mort de l'élément de coupe, dans lequel l'unité de commande (180) commande l'élément de coupe (132) pour découper la bande de pâte (140) sur la base du temps mort de l'élément de coupe (132), dans lequel l'unité de commande (180) commande (509) l'élément de coupe (132) pour découper la bande de pâte sur la base d'une comparaison (506) entre un poids cible du morceau de pâte et la somme d'une dernière valeur de poids déterminée et du produit du débit massique par le temps mort.

7. Procédé selon la revendication 6, dans lequel le dispositif de coupe de pâte (100) comprend une deuxième unité de pesage (102) pour déterminer une valeur de poids du morceau de pâte (141) de la bande de pâte (140), et l'unité de commande (180) détermine (504) le débit massique sur la base d'au moins deux valeurs de poids du morceau de pâte (141) déterminées successivement et d'au moins une deuxième valeur de poids du morceau de pâte (141) mesurée par la deuxième unité de pesage (102).

8. Procédé selon l'une des revendications 6 et 7, dans lequel l'unité de commande (180) commande ou bloque l'élément de coupe (132) pour découper la bande de pâte (140) sur la base d'une comparaison entre le débit massique déterminé et une valeur seuil.

9. Procédé selon la revendication 8, dans lequel l'unité de commande fournit (441) une information à un opérateur quand le débit massique déterminé est supérieur à la valeur seuil.

10. Procédé selon l'une quelconque des revendications 6 à 9, dans lequel l'unité de commande (180) détermine le débit massique sur la base de toutes les valeurs de poids déterminées après un actionnement de l'élément de coupe (132).

11. Procédé selon l'une des revendications 6 à 10, dans lequel une mesure de la valeur de poids d'un deuxième morceau de pâte (141) est effectuée après qu'un premier morceau de pâte a été retiré de la première unité de pesage (101), et/ou dans lequel la mesure de la valeur de poids du deuxième morceau de pâte (141) est effectuée après qu'une période d'attente s'est écoulée après la mesure de la valeur de poids du premier morceau de pâte.
